# EUROPEAN PATENT APPLICATION

(11) **EP 4 300 918 A1**
(43) Date of publication of application: **03.01.2024**
(21) Application number: 22182682.9
(22) Date of filing: 01.07.2022
(51) Int. Cl.: H04L 65/403, H04M 3/56

(54) **A METHOD FOR MANAGING SOUND IN A VIRTUAL CONFERENCING SYSTEM, A RELATED SYSTEM, A RELATED ACOUSTIC MANAGEMENT MODULE, A RELATED CLIENT DEVICE**

(71) Applicant: Connexounds BV, 3390 Tielt-Winge (BE); Katholieke Universiteit Leuven, KU Leuven R&D, 3000 Leuven (BE)
(72) Inventor: HASSANI, Amin, 3390 Tielt-Winge (BE); BERNARDI, Giuliano, 2000 Antwerpen (BE); MOONEN, Marc, 3020 Herent (BE); VAN WATERSCHOOT, Toon, 2560 Nijlen (BE)
(74) Representative: Gevers Patents

(57) **Abstract**

The present invention relates to a method, related virtual conferencing system, a related acoustic management module, a related client device for managing sound in a virtual conferencing system comprising a virtual conference server and a plurality of client devices coupled to said virtual conference server said plurality of client devices comprising a first subset of co-located client devices and a second subset of remote client devices, said method comprising the steps of detecting, by an Active client detection means, at least one active client device from/of said subset of co-located client devices based on detected input signals of a user of said client devices; and controlling, by an Acquisition control means, an acquisition of an outgoing audio signal exclusively from each of said at least one active co-located device and forwarding by only one active co-located device of said at least one active co-located device of a single outgoing audio signal comprising said outgoing audio signal acquired exclusively from each of said active co-located device, through said virtual conference server (10), to remote devices of said second subset of remote devices (300₁, 300₂.

## Description

### TECHNICAL FIELD

The present invention relates to a method for managing sound in a virtual conferencing system, a related system, a related acoustic management module, a related client device.

### BACKGROUND ART

A virtual conference can be defined as a live communication between several users (participants) linked by a virtual conference service (VCS) using a telecommunication network. The VCS supports virtual conference by providing audio, possibly and optionally accompanied by video and/or data services. Therefore, the term virtual conference is taken to include videoconferences (audio and video), audio conferences (only audio), web conferences and other forms of mixed media conferences or unified communications tools.

Virtual conferences may be held involving multiple participants located inside the same acoustic enclosure further referred to as co-located participants, such as the same conference room or the same classroom, with other participants located at a remote location. In this case, when the participants aim to join the call with their devices, they experience audio issues that arise from the fact that generally only a single device with audio can participate the virtual conference from each shared locale (referred to as audio-enabled device). In such scenarios, this sole audio-enabled device will inevitably be further from some participants in the room than others. This results in varied intelligibility of participants based solely on how near or far the participants are from the single active microphone. Further, the experience of those participants in the shared locale itself is also less than ideal since those furthest from the device are often left struggling to hear the single in-room device's speaker output that generates the voice of the remote participants.

Room acoustic imperfections in the local room (such as background noise and adverse room acoustics) can worsen the problem as it might worsen the already mentioned problem of low intelligibility for participants sitting further away from the active microphone.

Additionally, the fact that multiple participants use the same device provides misleading information to the remote participants of the teleconference, as it might not always be straightforward to understand which participants are the actual speakers (either in the case the video does not show all the participants, or in the case of providing only a single room-view video of the locale, or in the case of an audio-only teleconference). This strongly reduces the users' communication quality of experience (QoE) and leaves the remote participants with poor sense of engagement in the virtual conference.

Considering that nowadays most virtual conference participants have a personal communication device, it would potentially enhance both the video and audio experiences if the co-located participants could simply use their personal communications devices (such as laptops and smartphones) to participate in the virtual conference.

Such an approach could lead to an increased participation of the virtual conference participants, a simpler way to share content (e.g., data, document, etc) between participants, and to an overall enhanced user experience and efficiency in virtual conferences.

However, this approach is disadvantageous in that, since the participants speech is picked by several different microphones and since each participant in the same room will also have a speaker playing the sound of the teleconference, the number of potential feedback loops will increase dramatically with each active microphone in the room, damaging the conference quality, in both the local and the remote room, making the echo cancellation and enhancement strategies built-in a telecommunication system very difficult to perform.

Such a system is in particular disadvantageous in that the introduction of echo due to the plurality of feedback-loops reduces the users' communication quality of experience (QoE) and leaves the remote participants with poor sense of engagement in the virtual conference.

### DISCLOSURE OF THE INVENTION

It is an aim of the present invention to provide a method for managing sound in a virtual conferencing system, related devices and a related system of the above known type method but wherein the aforementioned shortcoming or drawbacks of the known solutions are alleviated or overcome.

Accordingly, embodiments of the present invention relate to a method for managing sound in a virtual conferencing system comprising a virtual conference server and a plurality of client devices coupled to said virtual conference server (10), said plurality of client devices comprising a first subset of co-located client devices (100₁, 100₂) and a second subset of remote client devices (300₁, 300₂), CHARACTERIZED IN THAT said method comprising the steps of:
- detecting, by an Active client detection means (ACDM) (108), at least one active client device amongst said first subset of co-located client devices based on a measured input signal associated to a user of said each said co-located client device and/or other distinctive attributes extracted from at least one sensor coupled to each said co-located client device; and
- controlling, by an Acquisition control means (ACM), an acquisition of an outgoing audio signal (105) exclusively from each of said active co-located device of said at least one active co-located device and forwarding, by only one active co-located device of said at least one active co-located device, of a single outgoing audio signal comprising said outgoing audio signal acquired exclusively from each of said active co-located device, through said virtual conference server (10), to remote devices of said second subset of remote devices (300₁, 300₂).
Another relevant embodiment of the present invention relates to the step of Controlling, by a playback control means (PCM), synchronization of a single incoming audio signal (106) comprising an incoming audio signal from at least one remote client device of said second subset of remote client devices (300₁, 300₂) through said virtual conference server (10), received exclusively at only one active co-located device of said at least one active co-located client device for playback at co-located client devices of said first subset of co-located client devices (100₁, 100₂).

Still another relevant embodiment of the present invention relates to a method for managing sound in a virtual conferencing system according to claim 2, wherein said method further comprises the step of:
- Controlling, by a playback control means (PCM), synchronization of said single outgoing audio signal (105) sent from said only one active co-located device of said at least one active co-located device, in addition to said incoming audio signal (106) received at said only one active co-located device of said of said at least one active co-located device.

Still another relevant embodiment of the present invention relates to a method for managing sound in a virtual conferencing system according to claim 1, wherein said method further comprises the steps of:
- Processing, by said Acquisition control means (ACM), said outgoing audio signal from each of said at least one active client device to obtain a processed outgoing audio signal from each of said at least one active client device; and
- Forwarding, by said acquisition control means (ACM), said processed outgoing audio signal from said only one active co-located device of said at least one active client device to said virtual conference server (10) for playback of said processed signal at each client device of said second subset of remote client devices (300₁, 300₂).

A further relevant embodiment of the present invention relates to a method for managing sound in a virtual conferencing system according to claim 5, wherein said step of processing said outgoing audio signal from said only one active co-located device of said at least one active client device comprises the step of enhancing the speech and/or audio quality of said outgoing audio signal from each of said at least one active client device.

Still another relevant embodiment of the present invention relates to a method for managing sound in a virtual conferencing system according to claim 2, wherein said method further comprises the steps of:
- Processing, by said playback control means (PCM), said single incoming audio signal received exclusively at said only one active co-located device client device of said at least one active device, to obtain a processed incoming audio signal for playback at co-located client devices of said first subset of co-located client devices (100₁, 100₂).

A further relevant embodiment of the present invention relates to a method for managing sound in a virtual conferencing system according to claim 7, wherein said step of processing said single incoming audio signal received exclusively at said one active co-located device client device of said at least one active co-located device comprises enhancing the speech and/or audio quality of said single incoming audio signal from said second subset of remote client devices (300₁, 300₂).

Another relevant embodiment of the present invention relates to a method for managing sound in a virtual conferencing system according to claim 1 or 2, wherein said method, in case said at least one active device comprises a plurality of active devices, further comprises the steps of:
- Transmitting, by each of said at least one active co-located client device, an acquired outgoing audio signal to an Acquisition control means (ACM) of said only one active co-located device of said at least one active co-located device; and
- mixing, by said Acquisition control means (ACM) said acquired outgoing audio signal of each said active co-located client device to generate said single outgoing audio signal; and
- forwarding, by said acquisition control means (ACM), said single outgoing audio signal, exclusively from said only one active co-located device of said at least one active co-located device to said virtual conference server (10) for playback of said processed at each remote client device.

Furthermore, a further relevant embodiment of the present invention relates to an acoustic management system (1) for managing sound in a virtual conferencing system comprising a virtual conference server (10) and a plurality of client devices, each coupled to said virtual conference server, said plurality of client devices comprising a first subset of co-located client devices (100₁, 100₂) and a second subset of remote devices (300i, 300₂), CHARACTERIZED IN THAT said acoustic management system further comprises an acoustic management means (AMM) configured to:
- detect at least one active client device from said first subset of co-located client devices (100₁, 100₂) based on a measured input signal associated to a user of each said co-located client device and/or other distinctive attributes extracted from at least one sensor coupled to each said co-located client device; and

Control to acquire an outgoing audio signal exclusively from each of said at least one active co-located device and to forward by only one active co-located device of said at least one active co-located device, a single outgoing audio signal, signal comprising said outgoing audio signal acquired exclusively from each of said active co-located device, to said virtual conference server (10) for playback at remote devices of said second subset of remote devices (300₁, 300₂).

A still further relevant embodiment of the present invention relates to an acoustic management system (1) according to claim 10 wherein said acoustic management means (AMM) further is configured to:
- control synchronization of an incoming audio signal received from at least one remote client device of said second subset of remote client devices (300₁, 300₂) through said virtual conference server (10), received exclusively at said only one active co-located device of said at least one co-located client device, for playback at co-located client devices of said first subset of co-located client devices (100₁, 100₂).

Another relevant embodiment of the present invention relates to an acoustic management module (AMM) for use in a virtual conferencing system (1) comprising a virtual conference server (VCS/10) and a plurality of client devices coupled to said virtual conference server, said plurality of client devices comprising a first subset of co-located client devices (100₁, 100₂) and a second subset of remote devices (300₁, 300₂), CHARACTERIZED IN THAT said acoustic management module (AMM) comprises:
- Active client detection means (ACDM), configured to detect at least one active client device from/of said first subset of co-located client devices based on a measured input signal associated to a user of each said co-located client device and/or other distinctive attributes extracted from at least one sensor coupled to each said co-located client device; and/or
- Acquisition control means (ACM), configured to control an acquisition of an outgoing audio signal exclusively from each of said at least one active co-located device and to forward by only one active co-located device of said at least one active co-located device, a single outgoing audio signal comprising said outgoing audio signal acquired exclusively from each of said active co-located device, to said virtual conference server (10) for play back at remote devices of said second subset of remote devices (300i, 300₂); and/or
- A playback control means (PCM), configured to control synchronization of a single incoming audio signal received from said virtual conference server (10) at said only one active co-located device of said at least one co-located client device, for playback at co-located client devices of said first subset of co-located client devices (100₁, 100₂).

Another relevant embodiment of the present invention relates to a Client device for use in a virtual conferencing system (1), wherein said client device (100₁, 100₂) comprises acoustic management module (AMM) according to claim 11.

A final relevant embodiment of the present invention relates to Dedicated conferencing device for use in a virtual conferencing system (1), wherein said Dedicated conferencing device comprises acoustic management module (AMM) according to claim 11.

Indeed this objective is achieved by first detecting at least one active client device from said subset of co-located client devices based on a measured input signal associated to a user of said each said co-located client device and/or other distinctive attributes extracted from at least one sensor coupled to each said co-located client device; and subsequently controlling the acquisition of an outgoing audio signal, exclusively from each of said at least one active co-located device and forwarding by only one, i.e. a single, active co-located device of said at least one active co-located device, of a single outgoing audio signal comprising said outgoing audio signal acquired exclusively from each of said active co-located device, through said virtual conference server (10), to remote devices of said second subset of remote devices (300₁, 300₂) for playback at these remote devices of said second subset of remote devices (300₁, 300₂), as in this manner by detecting the at least one active device from said subset of co-located client devices based on a measured input signal associated to a user of said each said co-located client device and/or other distinctive attributes extracted from at least one sensor coupled to each said co-located client device and subsequently exclusively acquiring an outgoing audio signal, from each of said at least one active device of said subset of co-located client devices and subsequently forwarding by only one active co-located device of said at least one active co-located device, of the single outgoing audio signal that comprises said outgoing audio signal which is acquired exclusively from each of said active co-located device, through said virtual conference server (10), to remote devices of said second subset of remote devices (300₁, 300₂) for playback at these remote devices of said second subset of remote devices (300₁, 300₂) while the number of potential acoustic feedback loops is limited, the listening quality of sound in the virtual conference at said second subset of remote client devices (300i, 300₂) is significantly improved, since it is guaranteed that the acquired outgoing audio signal from each of said at least one active device is always forwarded for playback at said second subset of remote client devices (300₁, 300₂)

Such at least one sensor coupled to each said co-located client device used by ACDM may comprise of acoustic sensors such as microphones, and/or image sensors such as video/web cameras, LIDAR and Infrared camera, and/or ooptical and light sensors.

The term "active" here primarily refers to the speech activity of a user of a co-located client device. Hence, when at a given moment ACDM detects an active client device from a subset of co-located client devices, that means that the user of such "active" client device is actually speaking at that moment.

Such distinctive attributes may be related to the (relative) acoustic energy and/or speech intelligibility of the acquired acoustic sensors such as microphones or may be related to the facial-recognition features of the active users based on the measurements of image sensors such as video/web cameras, LIDAR and/or Infrared camera.

Said only one active co-located device among said at least one active co-located device used for forwarding said single outgoing audio signal may be one of said at least one active co-located device, or may be a dedicated conferencing device. Such only one active co-located device may for instance be determined based on the (relative to the other co-located devices) computational capability and/or other resources such as network bandwidth or available power at said one of said at least one active co-located device, or at said dedicated conferencing device.

Furthermore, by subsequently controlling the synchronization of said received single incoming audio signal received from at least one remote client device of said second subset of remote client devices (300₁, 300₂), through said virtual conference server (10), received exclusively at only one active co-located device of said at least one active co-located device (wherein the same at least one active device used by ACM for the acquisition of an outgoing audio signal from said subset of co-located client devices), for playback at co-located client devices of said first subset of co-located client devices (100₁, 100₂), the received incoming audio signal is ensured to only contain the audio from said second subset of remote client devices (300₁, 300₂). By playing back such received single incoming audio signal at said co-located client devices of said first subset of co-located client devices (100₁, 100₂) in a synchronized manner, not only the number of potential acoustic feedback loops is further limited, but also the listening quality of sound in the virtual conference at said first subset of co-located client devices (100₁, 100₂) is significantly improved, as the same audio signal is played back via the loudspeakers of multiple of (or potentially each of) said co-located client devices (100₁, 100₂), thereby co-located participants can better hear the audio signal such as speech of said second subset of remote client devices (300₁, 300₂) during virtual conferences.

The synchronization of said received incoming audio signal from each of said at least one remote client devices for playback at co-located client devices of said first subset of co-located client devices (100₁, 100₂) needs to compensate for the different communication delays in the specific network paths such as D2D, different communication delays in the VCS (between the VCS servers and different VCS clients), especially when some of the clients use a wired connection and some others use a wireless connection, different latencies in the sound hardware of different APDs, different latencies in the processing (algorithmic delays, e.g., caused by encoding, encryption, compression) and/or Longer/less stable P2P delays due to the constraints in the local network (e.g., when the D2D signals need to travel further outside the local network due to the lack of possibility for direct connections between the devices within the local network they are connected to, i.e., typical scenarios where a NAT traversal is needed for D2D) The basic idea of this synchronization is that either co-located devices 100₁ and 100₂ both playback only the signal containing incoming audio signal from said second subset of remote client devices (300₁, 300₂), or in addition to that they also playback said outgoing audio signal forwarded for playback at said second subset of remote client devices (300₁, 300₂).

A further relevant embodiment of the present invention relates to additionally performing synchronization for playback of said single outgoing audio signal (105) sent from said only one active co-located device of said at least one active co-located device, in addition to said single incoming audio signal (106) received at said only one active co-located device of said at least one active co-located device. The synchronised single outgoing audio signal subsequently can be played back at each of the co-located client devices

Embodiments of the present invention are advantageous in that those co-located users that have not been detected by ACDM as an active client device, can further hear the speech of the active co-located user via the loudspeaker of their device, leading to loud and clear re-production and reinforcement of speech signals, which is especially beneficial for co-located users who are relatively far from the active client (while still within the same room). The present invention performs the latter, while ensuring no acoustic feedback issues arise due to such closed-loop local sound reproduction.

Still another relevant embodiment relates to a method for managing sound in a virtual conferencing system wherein said Acquisition control means (ACM) first processes said outgoing audio signal from each of said at least one active client device to obtain a processed outgoing audio signal from each of said at least one active client device and subsequently said acquisition control means (ACM) forwards said processed outgoing audio signal from said only one active co-located device of said at least one active client device to said virtual conference server (10) for playback of said processed signal at each client device of said second subset of remote client devices (300₁, 300₂).

Based on this optimum acquired sound, playback of this acquired sound can be performed at said second subset of remote client devices (300₁, 300₂) in an improved manner increasing the speech communication substantially.

It is to be noted that for the processing of the outgoing audio signal of said at least one active client device, the outgoing audio signals of other non-active devices may also be used, namely for performance improvement of enhancing of speech and audio quality of the outgoing audio signal of the active device, e.g., when techniques such as beamforming or other multi-microphone speech enhancement techniques may be exploited to improve the performance of said enhancing step.

Still another relevant embodiment relates to a method for managing sound in a virtual conferencing system wherein said method further comprises the steps of Processing, by said playback control means (PCM), said incoming audio signal received at said only one active co-located device client device of said at least one active device, to obtain a processed incoming audio signal for playback at co-located client devices of said first subset of co-located client devices (100₁, 100₂).

The step of processing may include enhancing the audio and/or speech to improve playback quality, processing to compensate for the effects of packet loss and network imperfections, processing to perform voice anonymization, natural language processing, speaker identification, speech recognition, processing for the purpose of audio-to-text transcription, or any processing that can either be favourable by the users, or favourable to quality of experience in virtual conferences.

Another relevant embodiment relates to a method for managing sound in a virtual conferencing system wherein the method further comprises the step of processing said single incoming audio signal received exclusively at said one active co-located device client device of said at least one active co-located device comprises enhancing the speech and/or audio quality of said single incoming audio signal received from said second subset of remote client devices (300₁, 300₂).

The said step of enhancing an audio quality of said incoming audio signal may comprise removal or suppression of background noise from said incoming audio signal before playback (in case any of the remote client devices (300₁, 300₂) join from a noisy place), and/or improving playback quality before sync playback (e.g., to convert lower quality audio received from virtual conferencing system to HD Voice quality)

A further relevant embodiment relates to a method for managing sound in a virtual conferencing system in case of a plurality of active devices, wherein the method comprises the steps of transmitting, by each of said active client device, an acquired outgoing audio signal to an Acquisition control means ACM of only one active co-located device of said at least one active co-located device which Acquisition control means ACM subsequently performs the step of mixing said acquired outgoing audio signal of each said active co-located client device to generate a single outgoing signal comprising said outgoing audio signal acquired exclusively from each of said active co-located device and where after the acquisition control means (ACM) performs the step of forwarding said single outgoing audio signal, exclusively from said only one active co-located device of said at least one active co-located device to said virtual conference server (10) where after the virtual conference server 10 may forward this outgoing signal comprising the respective acquired outgoing audio signal of each said active co-located client device for playback of said outgoing signal at each remote client device.

In this manner, amongst all co-located devices, the audio signal or sound is acquired from each of the plurality of active co-located client device(s), then mixed and finally forwarded from only one active client, limiting/preventing additional acoustic feedback loops to a minimum and consequently improving the acquired sound available for acquisition and playback without any disturbances.

### BRIEF DESCRIPTION OF THE DRAWINGS

The invention will be further elucidated by means of the following description and the appended figures.
Figure 1 represents an acoustic management system (AMS) for managing sound in a virtual conferencing system comprising a virtual conference server and a plurality of client devices; and
Figure 2 represents the functional elements of an acoustic management module incorporated in a client device according to an embodiment of the present invention.
Fig. 3 represents a timing diagram of embodiments according to the present invention presenting the case where the AMS is run either on a client device and/or on a Dedicated conferencing device;
Fig. 4 represents an embodiment according to the present invention illustrating the acquisition control means (ACM).
Fig. 5 represents an embodiment according to the present invention illustrating the playback control means (PCM), when the communication assist is disabled.

### MODES FOR CARRYING OUT THE INVENTION

The present invention will be described with respect to particular embodiments and with reference to certain figures, but the invention is not limited thereto but only by the claims. The drawings described are only schematic and are non-limiting. In the drawings, the size of some of the elements may be exaggerated and not drawn on scale for illustrative purposes. The dimensions and the relative dimensions do not necessarily correspond to actual reductions to practice of the invention.

Furthermore, the terms first, second, third and the like in the description and in the claims, are used for distinguishing between similar elements and not necessarily for describing a sequential or chronological order. The terms are interchangeable under appropriate circumstances and the embodiments of the invention can operate in other sequences than described or illustrated herein.

Moreover, the terms top, bottom, over, under and the like in the description and the claims are used for descriptive purposes and not necessarily for describing relative positions. The terms so used are interchangeable under appropriate circumstances and the embodiments of the invention described herein can operate in other orientations than described or illustrated herein.

The term "comprising", used in the claims, should not be interpreted as being restricted to the means listed thereafter; it does not exclude other elements or steps. It needs to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

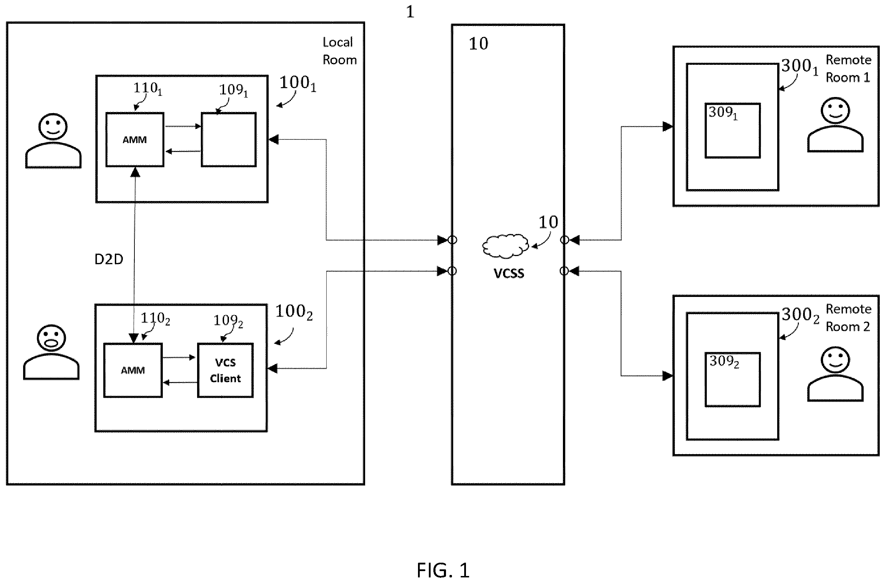

In the following paragraphs, referring to the drawing in FIG.1, an implementation of the system for managing sound in a virtual conferencing system according to an embodiment of the present invention is described. In a further paragraph, all connections between mentioned elements are defined. Subsequently all relevant functional means of the system for extracting data associated with a view of an application as presented in FIG.1 are described followed by a description of all interconnections.

In the succeeding paragraph the actual execution of the method for managing sound in a virtual conferencing system according to an embodiment of the present invention is described.

At first, a virtual conference can be defined as a live communication between several users linked by a virtual conference service (VCS) using a (cloud-based) telecommunication network. The VCS supports virtual conference by providing audio, possibly and optionally accompanied by video and/or data services. Therefore, the term virtual conference is taken to include videoconferences (audio and video), audio conferences (only audio), web conferences and other forms of mixed media conferences, or any kind of Unified Communication (UC) that accommodates multiple communication methods within a single platform.

Virtual conferences may be held involving multiple participants located inside the same acoustic enclosure, such as the same conference room or the same classroom, further using co-located client devices 100₁, 100₂, and with other participants located at a remote location further using remote client devices 300₁, 300₂. In this case, when the co-located participants client devices 100₁, 100₂ like to join the call with their devices, they experience audio issues that arises from the fact that generally only one actual device with audio is able to effectively participate the virtual conference from each shared locale (referred to as audio-enabled device). In such scenarios, this sole audio-enabled client device will inevitably be farther from some participants in the room than others. This results in varied intelligibility of participants speech based solely on how near or far the participants are from this single audio-enabled device with active microphone. Further, the experience of those participants in the shared locale itself is also less than ideal since those farthest from the sole audio-enabled client device are often left struggling to clearly hear the single in-room device's loudspeaker output (which is often limited by the re-production power of typical small-sized loudspeakers) that generates the voice of the remote participants.

An acoustic management system as shown in Fig.1, according to embodiments of the present invention is provided to manage sound in a virtual conferencing system comprises a virtual conference server 10 and a plurality of client devices, each coupled to said virtual conference server, said plurality of client devices comprising a first subset of co-located client devices 100₁, 100₂ and a second subset of remote client devices 300₁, 300₂.

A first essential element of the (cloud-based) virtual conferencing service VCS is a virtual conferencing server (10) which is a (set of) computing device(s) that may be implemented at a local or distributed server system (running on cloud) for supporting a virtual conferencing service for bringing premises-based video, audio, and web communication together to meet the collaboration needs of all coupled virtual conferencing client devices. It is noted that a virtual conferencing server (10) may comprise a multitude of devices each serving a different purpose, including but not limited to the NAT traversal servers, signalling servers, and media servers (e.g., server elements of the WebRTC technology).

Basic functionalities of the virtual conferencing server of a virtual conferencing service VCS for instance may comprise functionality to: 1) properly initiate the meeting session (on demand of the client users) 1) connect the participants to the correct video meeting 2) arrange the multimedia (audio and video and text) routing to the different connected participants 3) take care of authentication of the connected users 4) connecting with the other virtual conferencing servers in a distributed server systems Such virtual conference server device 10 or distributed device 10 may be enabled to run a virtual conferencing application for supporting such virtual conference service VCS, by means of a (distributed) server application, e.g., as a softphone or a VCS server software that may also support the streaming of video (e.g., Zoom, Microsoft Teams, Google Meet, CISCO Webex).

A second essential element of the system is a client device 100₁, 100₂, 300₁, 300₂ of the videoconferencing system. Such client device may be a user computing (personal) device suitable for video conferencing, or a dedicated conferencing device for use in a virtual conferencing system, both typically comprising Application Programmable devices (APDs).

Further in the explanation of the present invention, Application Non-Programmable devices (ANPDs) are considered as potential external peripherals coupled to at least one of the APDs suitable for video conferencing. Hence the ANPDs will not be changing the dynamics of the present acoustic management system (including the embodiments). Such a ANPD may comprise audio/video peripherals such as but are not limited to, headphones, teleconferencing microphones and loudspeakers, integrated speakerphones, (wired/wireless) (wearable) microphones and speakers having a display, camera, microphone and/or a keyboard supporting the virtual conference.

Such comprising Application Programmable devices APDs used as a client device may be a programmable storage device that can have program instructions stored thereon for causing a programmable control device to perform the instructions of the present invention. Accordingly, instructions for implementing embodiments of the present invention can be implemented in digital electronic circuitry, computer hardware, computer firmware, computer software, or any combination thereof. Instructions for implementing embodiments of the present invention can be implemented in a computer program product tangibly embodied in a machine-readable storage device for execution by a programmable processor so that the programmable processor executing program instructions can perform functions of the present disclosure. The instructions for implementing embodiments of the of the present invention can be implemented advantageously in one or more computer programs that are executable on a programmable system including at least one programmable processor coupled to receive data and instructions from, and to transmit data and instructions to, a data storage system, at least one input device, and at least one output device. Storage devices suitable for tangibly embodying computer program instructions and data include all forms of non-volatile memory, including by way of example semiconductor memory devices, such as EPROM, EEPROM, and flash memory 65 devices; magnetic disks such as internal hard disks and removable disks; magneto-optical disks; and CD-ROM disks. Any of the foregoing can be supplemented by, or incorporated in, ASICs (application-specific integrated circuits). Examples of such client device include, but are not limited to, are laptops, tablets, smartphones, hearing assistive devices, smart watches, smart speakers, smart TVs, smart PA systems, virtual conferencing speakerphones and room units (non-exhaustive list).

Each such client device 100₁, 100₂, 300₁, 300₂ is enabled to run a virtual conferencing client for supporting such virtual conference service VCS, by means of a client application, e.g., as a softphone or a VCS client software that can also stream video (e.g., Zoom, Microsoft Teams, Google Meet, CISCO Webex).

Examples of such client device when used as a user computing (personal) device: laptops, desktops, smartphones. Examples of such client device when used as a dedicated conferencing device: tabletop or wall-mounted conferencing equipment, smart TVs, meeting room hardware and collaboration systems, integrated conferencing IP phones, etc.

Each of these such client devices may be coupled to the virtual conferencing server 10 over a communication network such as, but are not limited to, mobile communication networks such as 2G, 3G, 4G or 5G cellular networks, (wireless)LAN networks, using various communications infrastructure, such as Ethernet, Wi-Fi, a personal area network (PAN), a wireless PAN, Bluetooth, near-field communication (NFC), the like and Fixed communications networks. Further examples of such communications networks may be home networks, corporate networks, school and institutional networks, public networks (shops, airports, stations, etc.)

The current virtual conferencing system according to embodiments of the present invention comprises a first subset of co-located client devices (100₁, 100₂) being client devices that are located inside the same acoustic enclosure, such as the same conference room or the same classroom.

Although such virtual conferencing system typically comprises a large amount of client devices in this description for reasons of simplicity only a limited number of client devices is described.

Each of the client devices 100₁, 100₂, 300₁, 300₂ may comprise a Virtual conferencing client module 109₁, 109₂, 309₁, 309₂ comprising virtual client functionality for supporting the virtual conference service VCS, by means of a client application, e.g., as a softphone or a VCS client software that can also stream video (e.g., client application software of Zoom, Microsoft Teams, Google Meet, CISCO WebEx). The co-located client devices 100₁, 100₂ according to the present invention further may comprise:
- an additional acoustic management module (110₁ AMM) comprising an Active client detection means (ACDM) that is configured to detect at least one active client device from/of said first subset of co-located client devices based on measured input signal associated to a user of said each said co-located client device and/or other distinctive attributes extracted from at least one sensor coupled to each said co-located client device.

Such at least one sensor coupled to each said co-located client device used by ACDM may comprise of aacoustic sensors such as microphones, and/or image sensors such as video/web cameras, LIDAR and Infrared camera, and/or optical and light sensors.

Such distinctive attributes could be related to the (relative) acoustic energy and/or speech intelligibility of the acquired aacoustic sensors such as microphones, or could be related to the facial-recognition features of the active users based on the measurements of image sensors such as video/web cameras, LIDAR and/or Infrared camera.

The co-located client devices 100₁, 100₂ according to the present invention further may additionally or alternatively comprise:
- an Acquisition control means (ACM) that is configured to control, an acquisition of an outgoing audio signal (105) exclusively from each of said active co-located device of said at least one active co-located device and to forward, by only one active co-located device of said at least one active co-located device, of a single outgoing audio signal comprising said outgoing audio signal acquired exclusively from each of said active co-located device, through said virtual conference server (10), to remote devices of said second subset of remote devices (300₁, 300₂) and/or- a playback control means (PCM) that is configured to control synchronization of a single incoming audio signal (106) comprising an incoming audio signal from at least one remote client device of said second subset of remote client devices (300₁, 300₂) through said virtual conference server (10), received exclusively at said only one active co-located device of said at least one active co-located client device for playback at co-located client devices of said first subset of co-located client devices (100₁, 100₂).

It is to be noted that although only client device 100₁ is disclosed, further client devices have a similar functional structure.
Each of the acoustic management module 110₁, 110₂ of such co-located client devices (100₁, 100₂) may be coupled by means of a device-to device coupling further referred to as D2D-communications network. The AMS device-to-device (D2D) communication network (the coupling interconnecting the APDs or client devices) may also be part of a Local Area Network (LAN) using various communications infrastructure, such as Ethernet, Wi-Fi, a personal area network (PAN), a wireless PAN, Bluetooth, WiFi Direct, near-field communication (NFC), and the like. This D2D network may also be realized through a mobile communications network (LTE, 3G, 4G, 5G). The D2D communication network may also be implemented by connecting devices directly via a direct link over the network to which such client devices are already connected. The D2D communication network may include a NAT traversal connections (e.g., when the local network does not allow direct communication between the devices).

FIG 1 represents a general case of a virtual conference wherein AMM of present invention is included within two client devices 100₁ and 100₂ in the local room, while two remote users and their corresponding APDs 300₁ and 300₂ are located in two separate remote rooms.

In the description of embodiments of the present invention, the term "*signal*" is used to refer to audio streams (in whole or in time-fragments) and/or signalling parameters. The signals may be classified as either:
- Intra-device (send to, or received from an element within a given client device or APD)
- Inter-device (send to, or received from another client device or APDs, or a dedicated conferencing device via the D2D network connecting co-located client devices) Signals may be transmitted and/or received at different transmission rates. For instance, the inter-device signalling parameters may be exchanged less frequently when compared to inter-device audio streams.

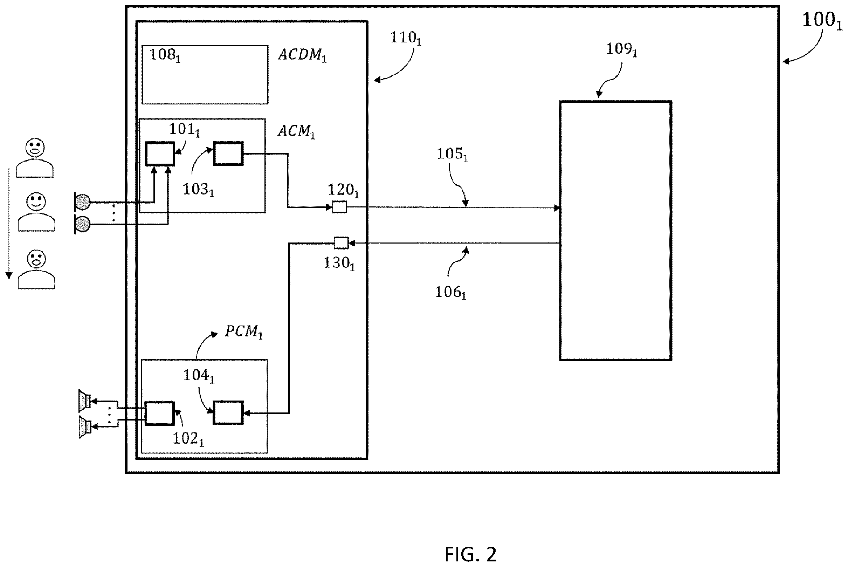

The main elements of the Acoustic management module (AMM) 110, within a client device APD (or a dedicated conferencing device) are represented in FIG 2. The general architecture and structure of such client device may include:
- One or more microphones;
- One or more loudspeakers;
- The Active Client Detection Means (ACDM): responsible for detection and tracking at least one active client device amongst said first subset of co-located client devices, and doing so continuously and over time
- The Acquisition Control Means (ACM):
   o The acquisition module 101, which may perform one or more of the following tasks:
      ▪ Acquiring intra-device signals from audio input peripherals of client device (built-in hardware and/or connected ANPDs)
      ▪ Generating intra-device signals.
      ▪ Receiving inter-device signals through the D2D data network from other APDs;
      ▪ Processing the inter-device and intra-device signals (together or separately);
      ▪ Transmitting processed signals to the outgoing controller module 103 of one or more relevant client devices (APDs) through the D2D data network where the processed signals may comprise either the audio signals of input peripherals processed in order to enhance the audio quality and/or speech intelligibility, or extracted features such as signal power or other observed statistics of the acquired signals;
   o The outgoing controller module 103, being configured to receive one or a combination of the processed intra-device signals and inter-device signals and feeds it to the outgoing interfacing module 120.
- The Playback Control Means (PCM):
   o The playback module 102, which may perform one or more of the following tasks:
      ▪ Receiving inter-device signals from the incoming controller module 104 of one or more relevant client devices APDs through the D2D data network;
      ▪ Processing the inter-device and intra-device signals (together or separately);
      ▪ Transmitting processed signals to the playback module 102 of one or more relevant client devices APDs through the D2D data network;
      ▪ Feeding the proper intra-device signals to the audio output peripherals (built-in hardware and/or connected ANPDs).
   ∘ The incoming controller module 104, being configured to fetch the incoming audio signal from the incoming interfacing module 130 and transmits it to the playback module 102 of one or more relevant APDs either through an internal connection (when module 104 connects to module 102 of the same device, i.e., intra-device), or through the D2D data network (when module 104 connects to module 102 of a different device, i.e., inter-device).
- The outgoing interfacing module 120, being configured to receive signals from the outgoing controller module 103 and feeds one or a combination of them to the virtual conferencing client module 109. This can be done in different ways depending on whether the AMM 110 and the virtual conferencing client module 109 are separate units (e.g., through a virtual audio driver (only for audio signals) or a dedicated Application Programmable Interface (API) (both audio signals and signaling parameters]) or the AMM is fully integrated into the virtual conferencing client module 109 (e.g., direct feed between different code modules/functions).
- The incoming interfacing module 130, being configured to fetch signals (106) from the virtual conferencing client module 109 and feed them to its incoming controller module 104. This can be done in different ways depending on whether the AMM and the virtual conferencing client module 109 are separate units (e.g., through a virtual audio driver (only audio signals) or a dedicated API (both audio signals and signaling parameters) or the AMM is fully integrated into the VCS client software (e.g., direct feed between different code modules/functions).

It is to be noted that in order to explain an embodiment of the present invention it is assumed that the co-location status may be manually assigned by the users of respective client devices via the user interface, e.g., joining the same virtual room identified by a unique ID and exploiting a discovery server providing each client device or APD with the IP addresses of the other client devices. Nevertheless, such co-location status can also be provided by the various techniques presented in the prior art.
In order to explain an embodiment of the present invention it is further assumed that user of client device 100₁ first starts speaking, while user of client device 100₂ stays silent, an active client detection means ACDM₁ at the client device 100₁ detects that user of client device 100₁ of the first subset of co-located client devices is active, which detection is performed based on measured input signal associated to a user of said each said co-located client device and/or other distinctive attributes extracted from at least one sensor coupled to each said co-located client device.

For instance, a relatively clearer and/or louder (i.e., more powerful) speech of an active user who is located closer to the client device 100₁ than client device 100₂ is detected at the microphone of client device 100₁. However, this does not mean that at the microphone of the further co-located devices 100₂ no speech of the associated active users is detected (since the two devices client devices 100₁ and 100₂ are still indeed co-located), but only means that the device 100₂ detects the speech of the user associated with client device 100₁ in a relatively less clear/lower power manner than that of 100₁. This difference in the relative speech quality may, for instance, be used by the active client detection means ACDM₁ to determine who of the co-located users are active clients.

The detected "active" status of client device 100₁ determined by the active client detection means ACDM is then shared across the devices of the acoustic management system (for instance via the D2D network coupling each co-located devices). The step of active client detection may be performed at the client device 100₁, and/or at the client device 100₂, and/or at a dedicated conferencing device.
Subsequently, it is assumed that the acquisition control means ACM₁ of the active client device 100₁ is configured to control an acquisition of the outgoing audio signal exclusively from the microphones and/or the ANPDs connected to the client device 100₁ (as it is the only active client device detected at this moment), process to obtain a single outgoing audio signal (where for the audio enhancement purpose the microphones and/or ANPDs connected to the client device 100₂ may also be used) and finally forward, through virtual conference servers, said single outgoing audio signal only from the active client device 100₁, for playback at the remote devices (300₁, 300₂) coupled to the same virtual conferencing session. It is emphasised that in this case, the ACM₂ of non-active client device 100₂ will control not to send an audio signal comprising the microphone signal and/or ANPD acquisition signal connected to the client device 100₂.
The processing of the outgoing audio signal to obtain a processed outgoing audio signal in case of single active co-located client device may comprise the audio and/or speech quality enhancement, such as noise reduction, dereverberation, room equalization, automatic gain control, dynamic range correction, audio bandwidth extension.

It is to be noted that to obtain a processed outgoing audio signal at the active co-located client device 100₁, the acquired signals of the non-active device client device 100₂ may also be used, namely for performance improvement of enhancing of speech and audio quality of the single outgoing audio signal forwarded from the active client device 100₁, when techniques such as beamforming or other multi-microphone speech enhancement may be exploited to improve the performance of said processing step.

To facilitate explaining an embodiment of the present invention, the said only one device that sends out the single outgoing audio signal and receives the single incoming audio signal will from now on be referred to a VCS interfacing device (VID). Other non-active co-located devices, will be referred to as VCS non-interfacing device (VNID).

Furthermore, the playback control means PCM₁ of the active client device 100₁ is configured to first fetch the incoming audio signal from the remote client devices (300₁, 300₂) received exclusively at the active client device 100₁, and then share this single incoming audio signal with the active client device 100₂ so that both the co-located client devices (100₁, 100₂) synchronize and playback this single incoming audio signal received at the active client device 100₁.

By synchronizing the received single incoming audio signal from from at least one remote client device of said second subset of remote client devices (300₁, 300₂), at said only at least one active device, for playback at co-located client devices of said first subset of co-located client devices (100₁, 100₂), the different communication delays are compensated so that the playback at the various remote client devices is performed synchronously. As a way of implementation in this embodiment, the synchronized signal of the received incoming audio signal from the at least one remote client device of said second subset of remote client devices (300₁, 300₂), ₁ for playback at the co-located client devices of said first subset of co-located client devices (100₁, 100₂) is communicated to the respective playback control means of each co-located client devices of said first subset of co-located client devices over the D2D network suitable for coupling the co-located devices.

The existing delays are the consequence of the specific network paths such as D2D, different communication delays in the VCS (between the VCS servers and different VCS clients), especially when some of the clients use a wired connection and some others use a wireless connection, different latencies in the sound hardware of different APDs, different latencies in the processing (algorithmic delays, e.g., caused by encoding, encryption, compression)and/or Longer/less stable P2P delays due to the constraints in the local network (e.g., when the D2D signals need to travel further outside the local network due to the lack of possibility for direct connections between the devices within the local network they are connected to)

It is further to be noted that although each of the mentioned means being the Active client detection means ACDM, and/or the Acquisition control means (ACM) and/or the playback control means (PCM), in this embodiment of the present invention are disclosed to be implemented in the co-located client device 100₁, alternatively each of these functional means may be implemented in a distributed manner and be jointly incorporated in both of the co-located client device 100₁, 100₂.
- A further relevant embodiment of the present invention relates to additionally performing by PCM synchronization of said single outgoing audio signal (105, FIG 2) sent from said only one active co-located device of said at least one active co-located device in addition to said incoming audio signal (106, FIG 2) received at said only one active co-located device of said at least one active co-located device, and then performing playback at each co-located client devices.
- This means that in the description above, when the ACDM detects device 100₁ as active client device, and hence the active client device 100₁ become a VID, PCM₁ only plays back said incoming audio signal, whereas PCM₂ plays back the mix of said outgoing audio signal and said incoming audio signal at VID, where the part corresponding to said incoming audio signal is played back synchronized with what PCM₁ plays back at the active client device 100₁
- Embodiments of the present invention are advantageous in that a user of a far placed client device within the same room from each of said at least one active device the speech of the active client is not sufficiently loud for being heard (while still co-located with the active client/participant within the same enclosure can better hear other users within the same room, without creating feedback problems.

Still another relevant embodiment of the present invention relates to in case of a plurality of active co-located client device that the processing, by said Acquisition control means (ACM) of said outgoing audio signal from each of said at least one active client device to obtain a processed outgoing audio signal from each of said at least one active client device and forwarding, by said acquisition control means (ACM), said processed outgoing audio signal from said only one of said at least one active client device to said server device (10) for playback of said processed outgoing audio signal at each client device of said second subset of remote client devices (300₁, 300₂).

In a further embodiment of the present invention the step of processing said outgoing audio signal from each of said at least one active client device comprises the step of] mixing said outgoing audio signal from each of said at least one active client device and enhancing audio quality of said single outgoing audio signal from each of said at least one active client device

The processing of such outgoing audio signal in case of a plurality of active devices may include at the co-located client devices (100₁, 100₂) (i.e., in the local room (FIG1)), performing both the step of mixing the signals acquired from each active co-located client device as well as the step of enhancing the audio quality of the resulting mixed signal. The resulting enhanced mixed outgoing audio signal is then forwarded to the virtual conference server 10 for playback at each client device of said second subset of remote client devices (300₁, 300₂).

Still another alternative embodiment of the present invention relates to a method for managing sound in a virtual conferencing system wherein said method further comprises the steps of processing, e.g. enhancing audio quality, by means of the playback control means (PCM) of the incoming audio signal from at least one remote client device of said second subset of remote client devices (300₁, 300₂), at at least one active device for playback at co-located client devices of said first subset of co-located client devices (100₁, 100₂).

This is an option to improve the audio quality before playback if for instance at least one remote participant joins the virtual conference from a noisy location. The Acoustic management module AMM may first process this incoming signal (in this example, reduce noise) and subsequently playback the processed audio signal in sync at said co-located client devices.

Still another alternative embodiment of the present invention relates to a method wherein said method, in case said at least one active device comprises a plurality of active devices, further comprises the steps of after said step of transmitting, by each of said at least one active client device, said outgoing audio signal to an Acquisition control means (ACM); and Acquiring, by said Acquisition control means (ACM) said outgoing audio signal of each said active co-located client device; and processing by an acquisition control means (ACM), said outgoing audio signal from each active co-located client device acquired to generate a playback signal for playback at each remote client device. The processing of the outgoing audio signal from each of said at least one active client device in case of multiple active co-located client devices may comprise the step of aligning and mixing different active client devices audio to generate said single outgoing audio signal from said only one of said at least one active device.

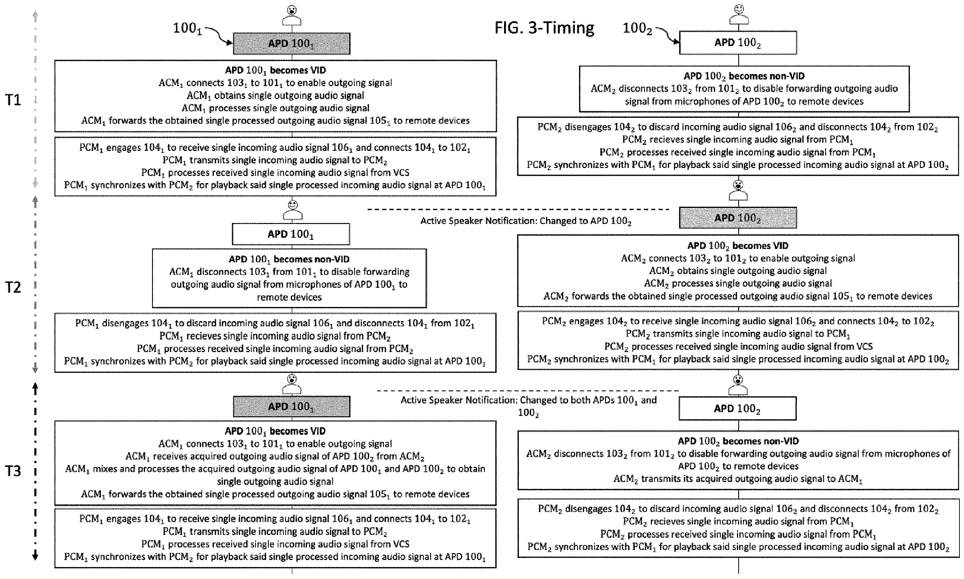

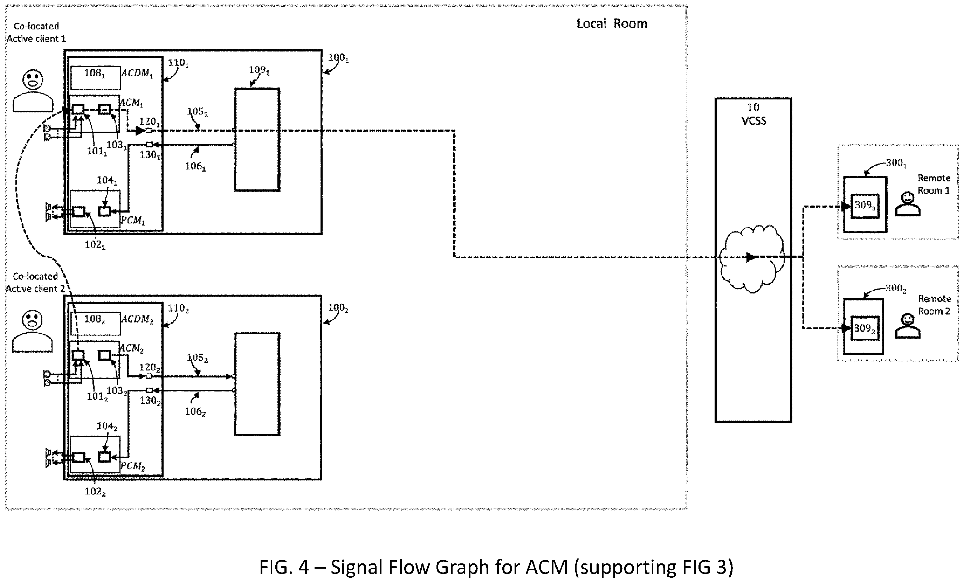

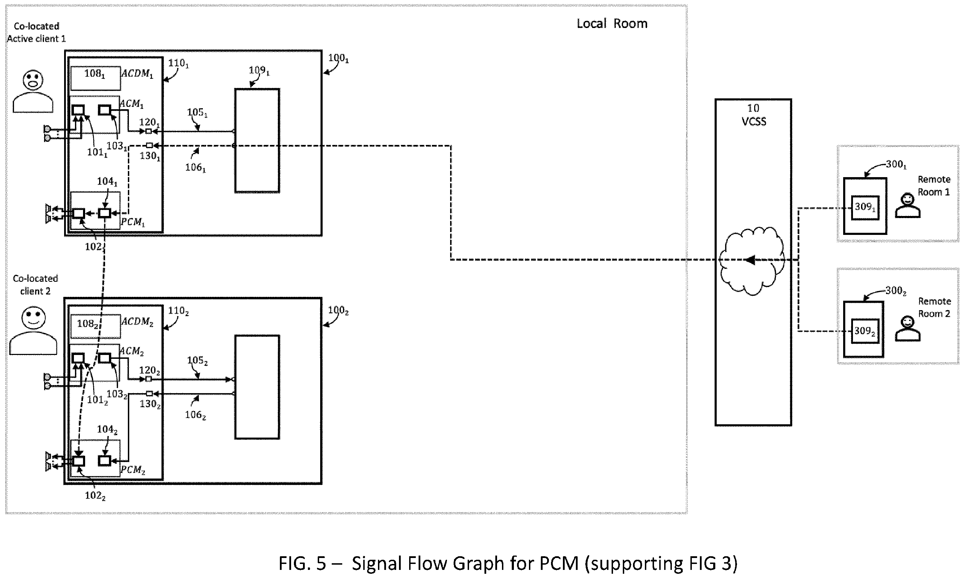

Detailed Description of the embodiment (incl. FIG. 3-Timing, FIG. 4 - ACM for support FIG 3, FIG. 5 - PCM for support FIG 3):
Embodiments of the present invention related to: two co-located client devices (100₁, 100₂), no dedicated conference device, detailed description of the present AMS dynamics.

In the following description further embodiments are described with reference to timing schemes as present in FIG.3. This following embodiment of the present invention discloses how the present acoustic management system (AMS) operates when two co-located client devices (100₁, 100₂) connect through a virtual conference server (10) to the remote devices (300₁, 300₂). All said devices 100₁, 100_{2 3001}, 300₂ are APDs, where they may use either their integrated microphones and loudspeakers and/or an ANPD used to connect to the virtual conferencing session.

In order to explain an embodiment of the present invention, three different time-segments (T1-T3) are envisaged based on the speaking activity of users of co-located client devices (100₁, 100₂). During the first time-segment (T1), it is assumed that user of client device 100₁ speaks, while user of client device 100₂ stays silent. Afterwards, during the second time-segment (T2), it is assumed that user of client device 100₂ takes turn and starts speaking, while user of client device 100_{1 stops} speaking. Finally, During the third time-segment (T3), it is assumed that there will be a segment where both the users of co-located client device 100₁ and co-located client device 100₂ will speak at the same time. Hence during the first two time-segments (T1-T2), we assume that there exists only one active speaker that is detected by the ACDM (where the only one active speaker is assumed to be closest to the first co-located client APD 100₁ during the first time-segment, and be closest to client APD 100₂ during the second time-segment).
Finally, during the third time-segment (T3), ACDM detects two active client devices at both APD 100₁ and APD 100₂. This is depicted in FIG3, and the detailed are explained in the following:

During the first time-segment (T1), following that ACDM detects co-located client APD 100₁ as the active client device, APD 100₁, the AMS selects the co-located client APD 100₁ as the only VCS interfacing device (VID) in the local room. As a result, the co-located client APD 100₁ will become the only device that is forwarding and fetching the audio signals to/from the virtual conferencing server. This entails that ACM₁ ensures that the right connection to the outgoing controller module 103₁ is established to enable single outgoing audio signals via APD 100₁ as the only VID in the local room. To achieve this, ACM₁ connects the acquisition module 101₁ to the outgoing controller module 103₁ so that said single outgoing audio signal obtained by the acquisition module 101₁ is fed to the outgoing controller module 103₁. At the same time, the co-located client APD 100₂ will become a non-VCS interfacing device (non-VID). Therefore, ACM₂ disconnects outgoing controller module 103₂ from acquisition module 101₂ to disable forwarding outgoing audio signal from microphones of co-located client APD 100₂ to remote devices. ACM₁ (potentially together with ACM₂) then obtains a processed single outgoing audio signal at the acquisition module 101₁ (including the stage of speech and audio quality enhancement) and finally forwards (via the outgoing controller module 103₁) the obtained single processed outgoing audio signal 105₁, through virtual conference server (10), to remote devices (300₁, 300₂). See FIG 4 for illustrations. It is noted that in FIG. 4 the dashed lines are used to indicate the signal flows (including both the D2D and the **single outgoing audio signal** forwarded exclusively by the only VID (active client APD 100₁ in this example), through said virtual conference server (10), to remote devices of said second subset of remote devices (300₁, 300₂).

Additionally, during this first time-segment (T1), PCM₁ engages the incoming controller module 104₁ to fetch the incoming signal 106₁ received from remote devices (300₁, 300₂) at co-located client APD 100₁, which is acting as the only present VID. Furthermore, PCM₁ connects incoming controller module 104₁ to playback module 102₁ to feed the loudspeakers of the co-located client APD 100₁. At the same time, PCM₂ disengages the incoming controller module 104₂ to discard incoming signals 106₂ received at co-located client APD 100₂. PCM₂ then receives and processes the incoming audio signal from PCM₁ (containing the single incoming signal 106₁ received at the active client APD 100₁). Finally, PCM₂ synchronizes with PCM₁ to play back said single incoming audio signal received originally at the active client APD 100₁ further via the loudspeakers of the co-located client APD 100₂. This way, the active client APD 100₁ as well as the non-active client APD 100₂ will both play back the same signal in a time-synchronized manner, in which such same signal only contains the audio from the remote devices (300i, 300₂). See FIG 5 for illustrations. It is noted that in FIG. 5 the dashed lines are used to indicate the signal flows (including both the D2D and the **single incoming audio signal** received exclusively at the only VID (active client APD 100₁ in this example), through said virtual conference server (10), from remote devices of said second subset of remote devices (300₁, 300₂).

During the second time-segment (T2), the user of co-located client APD 100₂ speaks, and the user of client device 100_{1 goes} silent. Following that ACDM detects co-located client APD 100₂ as the active client device, the AMS selects the co-located client APD 100₂ as the only VID in the local room. Afterwards, the procedure will be similar to the first time-segment (T1), except that during this second time-segment (T2), the co-located client APD 100₂ becomes the active client device, and therefore will become the only VID in the local room that is forwarding/fetching the outgoing/incoming audio signals to/from the virtual conferencing server. The detailed description of the steps, it is referred to FIG 3 where T2 is further elaborated.

During the third time-segment (T3), both the users of co-located client APD 100_{1 and} co-located client APD 100_{2 speak} at the same time, hence ACDM detects both APD 100₁ and APD 100₂ as active client devices. However, despite a plurality of active co-located devices, the AMS will select only one VID in the local room that is forwarding/fetching the outgoing/incoming audio signals to/from the virtual conferencing server.

The AMS selects said only one VID in the case of a plurality of active co-located devices, for instance, based on at least one of the following criteria: 1) last VID in the previous time-segment continues to serve as VID during the new time-segment (for instance APD 100₂ after being the VID during the second time-segment, may further be selected to serve as VID during the third time-segment), 2) a client or dedicated conference device with more power resources may be selected as a suitable option to serve as the only VID, 3) the device with a user that has detected active for a longer period of time and more frequently may be selected as the only VID.

In order to explain this embodiment of the present invention, here we assume that the AMS selects the co-located client APD 100₁ as the only one VID during the third time-segment (T3), when both the users of co-located client APD 100_{1 and} the co-located client APD 100₂ speak at the same time. Thereafter, the following specific procedure is carried out by the present AMS (related to Claim 8):

Firstly, ACM₁ connects the acquisition module 101₁ to the outgoing controller module 103₁ to enable outgoing signal. Meanwhile, ACM₂ disconnects its outgoing controller module 103₂ from its acquisition module 101₂ to disable forwarding outgoing audio signal from microphones of APD 100₂ to remote devices. ACM₂ then transmits its acquired outgoing audio signal to ACM₁ (through the established D2D communication network between APD 100₁ and APD 100₂). ACM₁ then receives acquired outgoing audio signal of APD 100₂ from ACM₂, then mixes and processes the acquired outgoing audio signal of APD 100₁ and APD 100₂ to obtain a single outgoing audio signal (that contains audio of both the users of co-located client APD 100₁ and co-located client APD 100₂). Finally, ACM₁ forwards from the active client APD 100₁ and through a virtual conference server (10), the obtained single processed outgoing audio signal 105₁ for playback at remote devices (300₁, 300₂). Hence the procedure of ACM during this third time-segment (T3) is comprising the steps of transmitting, mixing, and forwarding (supporting Claim 8). See FIG 4 for further illustrations.

Additionally, during this third time-segment (T3), PCM₁ engages the incoming controller module 104₁ to fetch the incoming signal 106₁ received from remote devices (300₁, 300₂) at co-located client APD 100₁, which is acting as the only present VID. Furthermore, PCM₁ connects incoming controller module 104₁ to playback module 102₁ to feed the loudspeakers of the co-located client APD 100₁, At the same time, PCM₂ disengages the incoming controller module 104₂ to discard incoming signals 106₂ received at co-located client APD 100₂. PCM₂ then receives and processes the incoming audio signal from PCM₁ (containing the single incoming signal 106₁ received at the active client APD 100₁). Finally, PCM₂ synchronizes with PCM₁ to play back said single incoming audio signal received originally at the active client APD 100₁ further via the loudspeakers of the co-located client APD 100₂. This way, the active client APD 100₁ as well as the non-active client APD 100₂ will both play back the same signal in a time-synchronized manner, in which such same signal only contains the audio from the remote devices (300i, 300₂). See FIG 5 for illustrations.

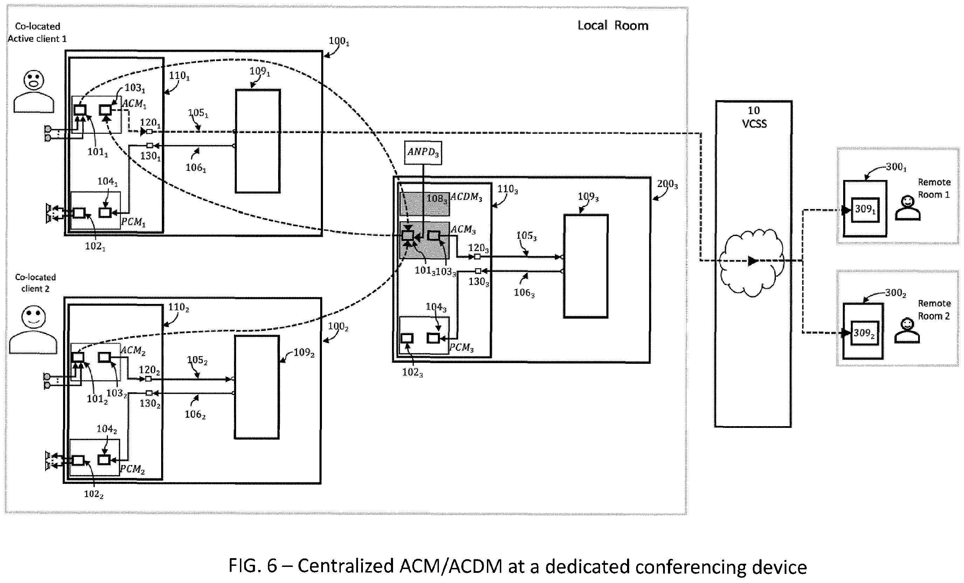

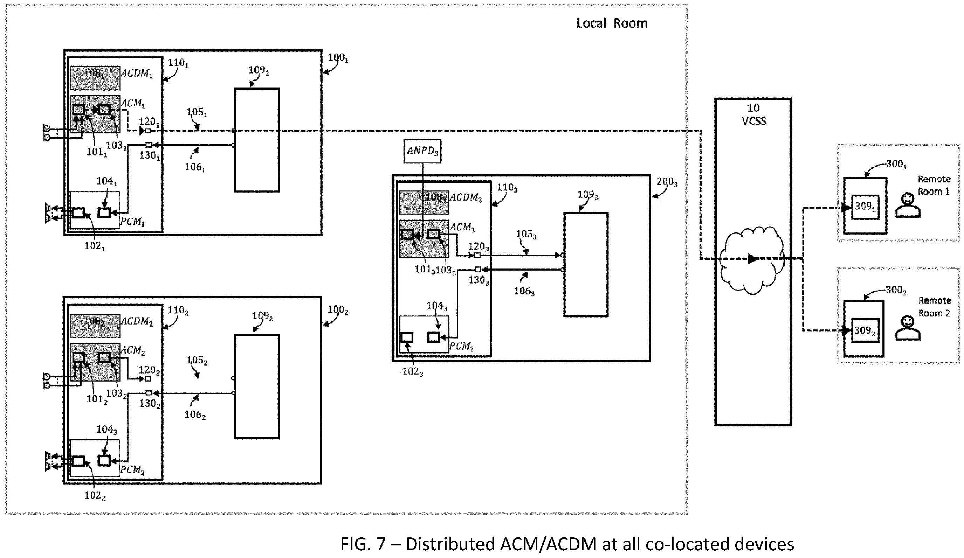

Following detailed Description relates to an embodiments of Centralized vs. Distributed Processing (incl. FIG. 6 - Centralized ACM/ACDM at a dedicated conferencing device and FIG. 7 - Distributed ACM/ACDM at all co-located devices)The Subsequent embodiments relates to two co-located client devices (100₁, 100₂), one dedicated conference device 200₃ which is connected to an ANPD, two remote devices (300₁, 300₂), description of the embodiment Centralized vs. Distributed Processing and advantages using FIG. 6 - Centralized ACM/ACDM at a dedicated conferencing device and FIG. 7 - Distributed ACM/ACDM at all co-located devices. Furthermore, advantages and disadvantages of each mode is outlined.

In the following description further embodiments are described with reference to the diagrams as present in FIG.6 and FIG 7. This following embodiment of the present invention discloses how the present acoustic management system (AMS) can carry out the processing in two different modes, referred to as Centralized Processing and Distributed Processing.

### Centralized processing mode:

Centralized mode entails that the any steps of signal processing of said means of the presented method for managing sound in a virtual conferencing system, comprising ACDM and/or ACM and/or PCM, is performed exclusively on only one of the co-located devices (client device or a dedicated conferencing device). Such steps of signal processing may include the detection of the active clients, aligning, mixing, encryption, decryption, compression, decompression of audio signals, speech and/or audio quality enhancement of outgoing and incoming audio signals, including e.g., noise reduction, localization of the speakers, dereverberation, room equalization, automatic gain control, dynamic range correction, audio bandwidth extension. Moreover, multi-microphone audio signal processing techniques in which spatial information can help to improve the performance e.g., adaptive beamforming techniques, may be considered as relevant signal processing.

FIG. 6 depicts an example of centralized processing mode, in which relevant signal processing steps of ACDM and ACM is performed exclusively on only the dedicated conference device 200₃.

It is noted that in FIG. 6 the dashed lines are used to indicate the signal flows (including both the D2D and the single outgoing audio signal forwarded exclusively by the only VID (active client APD 100₁ in this example), through said virtual conference server (10), to remote devices of said second subset of remote devices (300₁, 300₂).

To achieve this, first the other two co-located client devices (100₁, 100₂) are required to send their acquired outgoing (raw) audio signals from their acquisition module 101₁ and 101₂ to the acquisition module 101₃ of dedicated conference device 200₃ which is the only device in the local room responsible to perform all the relevant processing of 1) the ACDM running exclusively on 108₃ to determine who of the co-located clients are active and 2) the ACM running exclusively on acquisition module 101₃ to obtain the processed single outgoing audio signal for the VID, following the determination of the active client device. The single outgoing audio signal may then be sent to the VID so that its outgoing controller module forwards the single outgoing audio signal to the remote devices (300₁, 300₂). Alternatively, the dedicated conferencing device can become the only VID in the local room and forwards the single outgoing audio signal to the remote devices (300₁, 300₂). It is to be noted that, although not depicted in FIG 6, PCM can also be independently performed exclusively on only one co-located device. It is also to be noted that the ACDM, ACM and/or PCM may all run in centralized mode, while they do not need to all perform on the same co-located device (e.g., ACDM could run on the dedicated conferencing device 200₃, while ACM could run on co-located client device 100₁, and while ACM could run on the co-located client device 100₂. In this case, as long as any of ACDM, and/or PCM, and/or ACM is performed on only a single co-located device, the processing mode for that specific means is considered to be centralized). In FIG 6, a shading is added to emphasize that only the dedicated conferencing device 200₃ contribute to performing the signal processing required by ACDM and ACM.

The main advantage of such centralize processing is signal processing performance, which can often be optimized due to the fact that all signals can be accessible at once and in only one co-located device. For instance, signal processing tasks such as special noise reduction, signal alignment, localization of the speakers, can benefit from having access to all microphone signals of all col-located devices at once.
The major disadvantage is the amount of resources required in terms of the processing power and the overall communication bandwidth to realize such centralize processing. Moreover, such centralized processing is not suitable for scalability as the amount of processing power as well as the overall required communication bandwidth can increase significantly as the number of co-located devices grows. Finally, such centralized processing may not be very robust, since if said only one processing device fails (e.g., due to power shortage or crashes due to processing overload), the entire AMS may be impacted.

### Distributed processing mode:

The distributed processing mode entails that the any steps of signal processing of said means of the presented method for managing sound in a virtual conferencing system, comprising ACDM and/or ACM and/or PCM, is performed jointly on a plurality of co-located devices (client device or a dedicated conferencing device).

This means that, unlike the centralized mode depicted in FIG 6 that ACDM and ACM are performed exclusively on only the dedicated conference device 200₃, as depicted in in FIG 7, in the distributed mode ACDM and ACM are performed jointly on both of the co-located client devices (100₁, 100₂) as well as on the dedicated conference device 200₃ . In FIG 7, a shading is added to emphasize that all the co-located devices jointly contribute to performing the signal processing required by ACDM and ACM.

In this case, the co-located devices instead of sending their acquired outgoing (raw) audio signals from their acquisition module 101 to the acquisition module 101 of the only device in the local room responsible to perform all the relevant processing, they pre-process their acquired outgoing (raw) audio signals in such a way that it requires less communication bandwidth to transmit required information to the other co-located devices.

It is to be noted that although for the sake of simpler illustrations, such communication links/ signal flows are not depicted in FIG 7, the required communication (containing signals and/or parameters) for adjusting the processing in distributed mode is carried out through the D2D between the devices.

For instance, the co-located client device 100₁ first processes the acquired outgoing (raw) audio signals inside its acquisition module 101₁ to extract relevant information that is needed at the other co-located devices in order to perform the time-alignment and/or the ACDM. Similarly, the co-located client device 100₂ and the dedicated conference device 200₃ perform similar processing inside their acquisition modules. This way, since each co-located device contributes to the overall processing of ACDM and ACM, such overall processing is shared/distributed between the different co-located devices.

The main advantages of such distributed processing (when compared against a centralized processing as an alternative) can be outlined as follows: 1) co-located device communication over the D2D requires less overall communication bandwidth, 2) the overall processing is shared among the different co-located devices and hence not relatively large amount of resources is need on one single device, 3) the present AMS becomes more scalable when such distributed processing is adopted, since each added co-located device contributes to the extra processing burden that would normally be added to ACDM, and/or ACM, and/or PCM by such co-located device addition, 4) the AMS becomes more robust when such distributed processing is adopted, as a failure on one co-located device have little to no impact on the operation of the rest of the co-located devices in the AMS.

It is to be noted that, although not depicted in FIG 7, PCM can also be independently performed in distributed mode on plurality of co-located devices. It is also to be noted that the ACDM, ACM and/or PCM may independently run wither on centralized mode or distributed mode (e.g., ACDM could run on all co-located devices (i.e., in distributed mode), while ACM and PCM run on a single co-located client device (i.e., in centralized mode)). A final remark is that embodiments of the present invention are described above in terms of functional blocks. From the functional description of these blocks, given above, it will be apparent for a person skilled in the art of designing electronic devices how embodiments of these blocks can be manufactured with well-known electronic components. A detailed architecture of the contents of the functional blocks hence is not given.

It is further contemplated that some of the steps discussed herein as software methods may be implemented within hardware, for example, as circuitry that cooperates with the processor to perform various method steps. Portions of the present invention may be implemented as a computer program product wherein computer instructions, when processed by a computer, adapt the operation of the computer such that the methods and/or techniques of the present invention are invoked or otherwise provided. Instructions for invoking the inventive methods may be stored in fixed or removable media, transmitted via a data stream in a broadcast or other signal bearing medium, and/or stored within a working memory within a computing device operating according to the instructions.

Although various embodiments which incorporate the teachings of the present invention have been shown and described in detail herein, those skilled in the art can readily devise many other varied embodiments that still incorporate these teachings. While the principles of the invention have been described above in connection with specific apparatus, it is to be clearly understood that this description is merely made by way of example and not as a limitation on the scope of the invention, as defined in the appended claims.

## Claims

1. A method for managing sound in a virtual conferencing system comprising a virtual conference server and a plurality of client devices coupled to said virtual conference server (10), said plurality of client devices comprising a first subset of co-located client devices (100₁, 100₂) and a second subset of remote client devices (300₁, 300₂), **CHARACTERIZED IN THAT** said method comprising the steps of:
- detecting, by an Active client detection means (108), at least one active client device amongst said first subset of co-located client devices based on a measured input signal associated to a user of said each said co-located client device and/or other distinctive attributes extracted from at least one sensor coupled to each said co-located client device; and
- controlling, by an Acquisition control means (ACM), an acquisition of an outgoing audio signal (105) exclusively from each of said active co-located device of said at least one active co-located device and forwarding, by only one active co-located device of said at least one active co-located device, of a single outgoing audio signal comprising said outgoing audio signal acquired exclusively from each of said active co-located device, through said virtual conference server (10), to remote devices of said second subset of remote devices (300₁, 300₂)

2. A method for managing sound in a virtual conferencing system according to claim 1, wherein said method further comprises the steps of:
- Controlling, by a playback control means (PCM), synchronization of a single incoming audio signal (106) comprising an incoming audio signal from at least one remote client device of said second subset of remote client devices (300₁, 300₂) through said virtual conference server (10), received exclusively at said only one active co-located device of said at least one active co-located client device for playback at co-located client devices of said first subset of co-located client devices (100₁, 100₂).

3. A method for managing sound in a virtual conferencing system according to claim 2, wherein said method further comprises the step of:
- Controlling, by a playback control means (PCM), synchronization for playback of said single outgoing audio signal (105) sent from said only one active co-located device of said at least one active co-located device, in addition to said single incoming audio signal (106) received at said only one active co-located device of said at least one active co-located device.

4. A method for managing sound in a virtual conferencing system according to claim 1, wherein said method further comprises the steps of:
- Processing, by said Acquisition control means (ACM), said outgoing audio signal from each of said at least one active client device to obtain a processed outgoing audio signal from each of said at least one active client device; and
- Forwarding, by said acquisition control means (ACM), said processed outgoing audio signal from said only one active co-located device of said at least one active client device to said virtual conference server (10) for playback of said processed signal at each client device of said second subset of remote client devices (300₁, 300₂).

5. A method for managing sound in a virtual conferencing system according to claim 5, wherein said step of processing said outgoing audio signal from said only one active co-located device of said at least one active client device comprises the step of enhancing the speech and/or audio quality of said outgoing audio signal from each of said at least one active client device.

6. A method for managing sound in a virtual conferencing system according to claim 2, wherein said method further comprises the steps of:
- Processing, by said playback control means (PCM), said single incoming audio signal received exclusively at said only one active co-located device client device of said at least one active device, to obtain a processed incoming audio signal for playback at co-located client devices of said first subset of co-located client devices (100₁, 100₂).

7. A method for managing sound in a virtual conferencing system according to claim 6, wherein said step of processing said single incoming audio signal received exclusively at said one active co-located device client device of said at least one active co-located device comprises enhancing the speech and/or audio quality of said single incoming audio signal from said second subset of remote client devices (300₁, 300₂).

8. A method for managing sound in a virtual conferencing system according to claim 1 or 2, wherein said method, in case said at least one active device comprises a plurality of active devices, further comprises the steps of:
- Transmitting, by each of said at least one active co-located client device, an acquired outgoing audio signal to an Acquisition control means (ACM) of said only one active co-located device of said at least one active co-located device; and
- mixing, by said Acquisition control means (ACM) said acquired outgoing audio signal of each said active co-located client device to generate said single outgoing audio signal; and
- forwarding, by said acquisition control means (ACM), said single outgoing audio signal, exclusively from said only one active co-located device of said at least one active co-located device to said virtual conference server (10) for playback of said processed single outgoing audio signal at each remote client device.

9. An acoustic management system (1) for managing sound in a virtual conferencing system comprising a virtual conference server (10) and a plurality of client devices, each coupled to said virtual conference server, said plurality of client devices comprising a first subset of co-located client devices (100₁, 100₂) and a second subset of remote devices (300₁, 300₂), **CHARACTERIZED IN THAT** said acoustic management system further comprises an acoustic management means (AMM) configured to:
- detect at least one active client device from said first subset of co-located client devices (100₁, 100₂) based on a measured input signal associated to a user of each said co-located client device and/or other distinctive attributes extracted from at least one sensor coupled to each said co-located client device; and
- Control to acquire an outgoing audio signal exclusively from each of said at least one active co-located device and to forward by only one active co-located device of said at least one active co-located device, a single outgoing audio comprising said outgoing audio signal acquired exclusively from each of said active co-located device, to said virtual conference server (10) for playback at remote devices of said second subset of remote devices (3001, 3002).

10. An acoustic management system (1) according to claim 9 wherein said acoustic management means (AMM) further is configured to:
- control synchronization of an incoming audio signal received from at least one remote client device of said second subset of remote client devices (300₁, 300₂) through said virtual conference server (10), received exclusively at said only one active co-located device of said at least one co-located client device, for playback at co-located client devices of said first subset of co-located client devices (100₁, 100₂).

11. An acoustic management module (AMM) for use in a virtual conferencing system (1) comprising a virtual conference server (VCS/10) and a plurality of client devices coupled to said virtual conference server, said plurality of client devices comprising a first subset of co-located client devices (100₁, 100₂) and a second subset of remote devices (300₁, 300₂), **CHARACTERIZED IN THAT** said acoustic management module (AMM) comprises:
- Active client detection means (ACDM), configured to detect at least one active client device from/of said first subset of co-located client devices based on a measured input signal associated to a user of each said co-located client device and/or other distinctive attributes extracted from at least one sensor coupled to each said co-located client device; and/or
- Acquisition control means (ACM), configured to control an acquisition of an outgoing audio signal exclusively from each of said at least one active co-located device and to forward by only one active co-located device of said at least one active co-located device, a single outgoing audio signal comprising said outgoing audio signal acquired exclusively from each of said active co-located device, to said virtual conference server (10) for play back at remote devices of said second subset of remote devices (300₁, 300₂); and/or
- A playback control means (PCM), configured to control synchronization of a single incoming audio signal received from said virtual conference server (10) at said only one active co-located device of said at least one co-located client device, for playback at co-located client devices of said first subset of co-located client devices (100₁, 100₂).

12. Client device for use in a virtual conferencing system (1), wherein said client device (100₁, 100₂) comprises acoustic management module (AMM) according to claim 11.

13. Dedicated conferencing device for use in a virtual conferencing system (1), wherein said Dedicated conferencing device comprises acoustic management module (AMM) according to claim 11.
